# EUROPEAN PATENT APPLICATION

(11) **EP 2 141 893 A1**
(43) Date of publication of application: **06.01.2010**
(21) Application number: 08305368.6
(22) Date of filing: 01.07.2008
(51) Int. Cl.: H04L 29/12

(54) **Network communication method**

(71) Applicant: THOMSON LICENSING, 92100 Boulogne-Billancourt (FR)
(72) Inventor: Ma, Xiaobo, Hai Dian District, Beijing 100085 (CN)
(74) Representative: Ruellan-Lemonnier, Brigitte

(57) **Abstract**

A method for a Host, Host A, communicating with another Host, Host B, in a communication network is provided, wherein both hosts have a first address and a second address in the communication network. The method comprises steps of: receiving a packet encapsulated with the first address and the second address of Host A, the second address of the Host B, and a wildcard for the first address, which can be admitted by Host B, responding to the Host A with a reply packet encapsulated with the first address and second address of Host A, and the first address and the second address of Host B.

## Description

### FIELD OF THE INVENTION

This invention relates to network communication method, especially relates to IP address discovery in a Local Area Network.

### BACKGROUND OF THE INVENTION

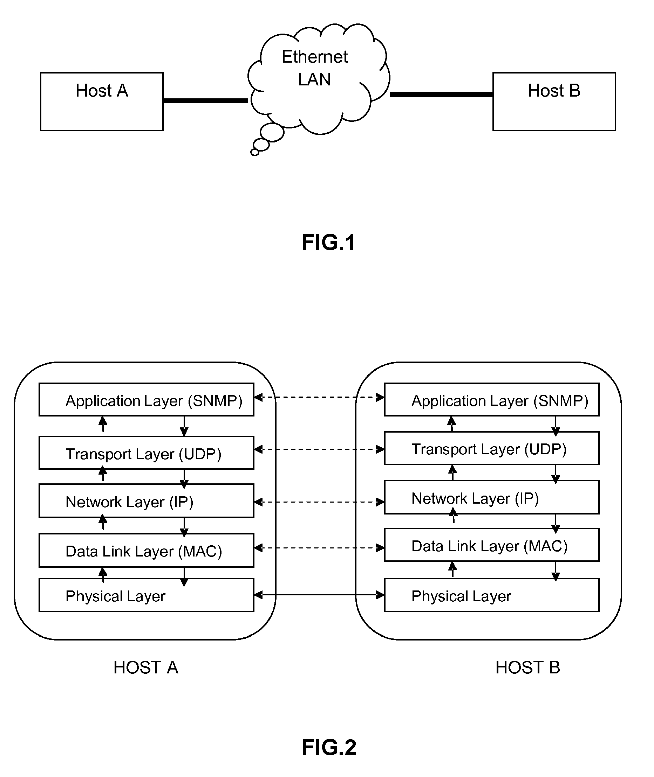

Traditionally, as shown in Fig.1, in a Local Area Network (LAN), there are two hosts, for example, Host A and Host B. The IP address and MAC Address of Host A are (10.0.30.18) and (0x00, 0x0f, 0x1f, 0x96, 0x4a, 0xad) respectively. Whereas, the IP address of Host B is (10. 0. 30. 66), and the MAC address of Host B is (0x00, 0x50, 0xb6, 0x00, 0x45, 0xbf). In a condition that Host A wants to send data to Host B and it only knows Host B's MAC address but doesn't know Host B's IP address, normally, Host A has to turn to the 2nd layer (Data Link Layer of TCP/IP Reference Model) for help first. Naturally, InARP protocol (RFC 2390) is thought as the immediate solution to the problem. That is, in the LAN that hosts both A and B are connected to, Host A broadcasts an InARP REQUEST packet within which a request to the IP address corresponding to Host B' MAC address is included. When Host B (also Integrated InARP) receives such an InARP REQUEST packet, it directly replies to Host A with an InARP REPLY packet within which the wanted Host B's IP address is specified.

Thus, Host A identifies the InARP reply and retrieves Host B's IP address. And then a normal network session with Host B may be kicked off from Host B's IP address by Host A.

Apparently, there are shortcomings when using above traditional method. Firstly, InARP is not a mandatory component in most embedded TCP/IP stacks, nor even in network stacks of Linux and Windows. Further, the traffic of the LAN is subject to broadcasting imported by InARP REQUEST, and gets even worse in case of multiple such instances existing.

### SUMMARY OF THE INVENTION

In a first aspect, a method for Host A communicating with Host B in a communication network is provided. In the method, both Host A and Host B have a first address and a second address in the communication network. The method comprises steps of: sending out a packet encapsulated with the first address and the second address of Host A, the second address of the Host B, and a wildcard which can be admitted by Host B.

In the first aspect, the first address is IP address and the second address is MAC address.

In the first aspect, the wildcard is an IP broadcasting address.

In an embodiment of the first aspect, the packet sent out is further capsulated with UDP Echo Request message.

In another embodiment of the first aspect, the packet sent out is further capsulated with SNMP Query message.

In still another embodiment of the first aspect, the packet sent out is further capsulated with ICMP Echo Request message.

In a second aspect, a method for Host B communicating with Host A in a communication network is provided. Both Host B and Host A have a first address and a second address in the communication network. The method comprises steps of: receiving a packet encapsulated with the first address and the second address of Host A, the second address of the Host B, and a wildcard which can be admitted by Host B, responding to the Host A with a reply packet encapsulated with the first address and second address of Host A, and the first address and the second address of Host B.

In the second aspect, the first address is IP address and the second address is MAC address.

In the second aspect, the wildcard is an IP broadcasting address.

In an embodiment of the second aspect, the received packet is capsulated with UDP Echo Request message and the reply packet is encapsulated with UDP Echo Reply message.

In another embodiment of the second aspect, the received packet is capsulated with SNMP Query message and the reply packet is encapsulated with SNMP Reply message.

In still another embodiment of the second aspect, the packet sent out is capsulated with ICMP Echo Request message and the reply packet is encapsulated with ICMP Echo Reply message.

In the first aspect and the second aspect, the communication network is a Local Area Network.

### BRIEF DESCRIPTION OF THE DRAWINGS

FIG.1 is a Local Area Network system including Host A and Host B;
FIG.2 is an instance of the TCP/IP reference model;
FIG.3 shows an exemplary structure of a packet with UDP datagram being used;
FIG.4 shows the composition of protocol headers in the packet of Fig.3;
FIG.5 is an exemplary encapsulated packet with UDP datagram to be sent from Host A to Host B;
FIG.6 is an exemplary reply packet with UDP datagram to be returned from Host B to Host A;
FIG.7 is an illustrative structure of a packet with SNMP message being comprised;
FIG.8 shows the composition of protocol headers in the packet of Fig.7;
FIG.9 shows an exemplary packet with SNMP Query message to be sent from Host A to Host B;
FIG.10 is an exemplary packet with SNMP Reply message to be returned from Host B to Host A;
FIG. 11 is an illustrative structure of the packet encapsulated with ICMP message;
FIG.12 shows the composition of protocol headers of the packet of Fig.11;
FIG. 13 shows an exemplary packet with ICMP Echo Request message to be sent from Host A to Host B;
FIG.14 is an exemplary packet with ICMP Echo Reply message to be returned from Host B to Host A.

### DETAILED DESCRIPTION OF THE INVENTION

In the Local Area Network, for example, according to TCP/IP Reference Model over Ethernet, shown in Fig.2, when data is transmitted from Host A to Host B, first, the data is encapsulated at the Host A downwards layer by layer and ends up into an Ethernet frame and then sent to the Host B. When the Host B receives the Ethernet frame, inversely, and Host B begins to de-capsulate it upwards layer by layer and finally extracts the data.

In principle, thanks to RFC 862 (Echo protocol), Host A tries to deliver a UDP Echo Request datagram embedded in an innovatively encapsulated IP datagram and then MAC frame only to Host B, expects an IP datagram (certainly encapsulated in a MAC frame from Host B) carrying a UDP Echo Reply datagram from Host B, and last, Host A retrieves the IP address of Host B from that IP datagram.

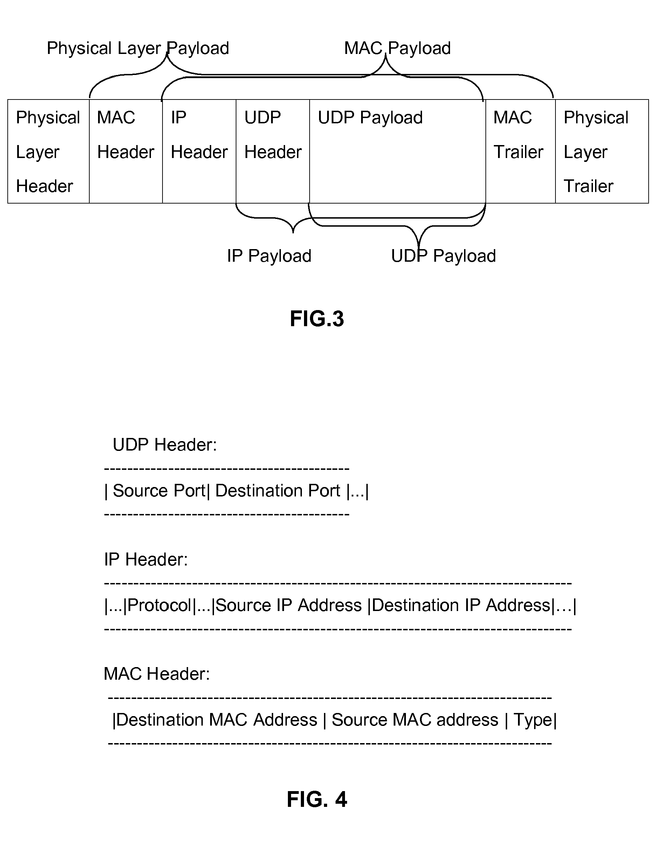

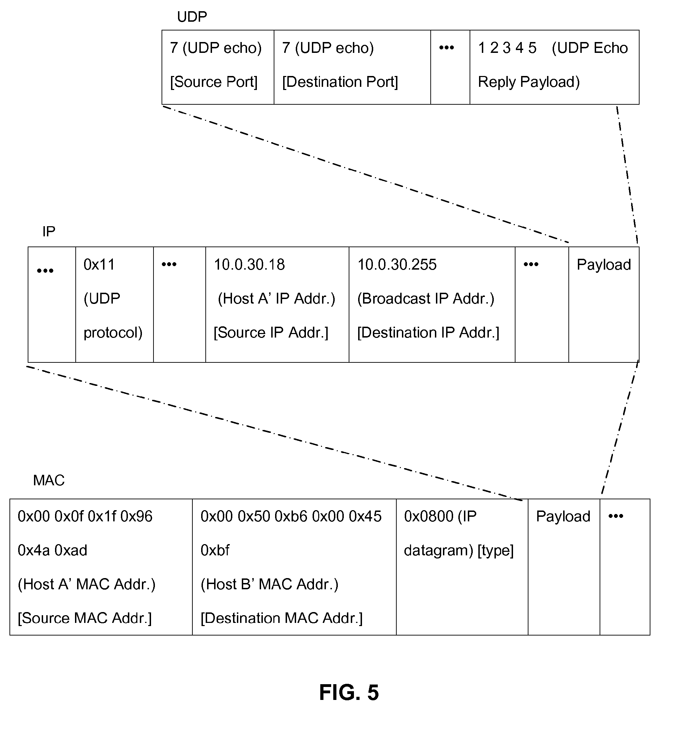

FIG.3 shows an exemplary structure of a packet with UDP datagram being used. FIG.4 shows the composition of protocol headers in the packet of Fig.3. FIG.5 is an exemplary encapsulated packet with UDP datagram to be sent from Host A to Host B.

See Fig 3, Fig.4, and Fig.5, during the UDP capsulation on Host A, in the UDP header, the Destination Port's number is 7, which is defined as a known port in Echo Protocol (RFC 862 ), and the Source Port' number is also assumed to 7 for instance. The UDP payload contains data to be echoed from Host B, here, and it is supposed to be 12345.

When the IP header is concerned, the Protocol Type is 0x11, specified for example in RFC 790, which means a UDP datagram is carried in the IP payload, the Source IP address is the IP address of Host A, which is (10.0.30.18), as shown in Fig.5.

Here it is assumed that Host A and Host B should be both configured in the same sub-network, that is, the IP address of Host A (10.0.30.18) should also be recognized as one IP address of the local network, judged from the combination of network number and subnet mask, by Host B who attempts to reply Host A in the future.

The Destination IP Address should be the IP address of Host B, but it, i.e., the IP address of Host B, is un-known to Host A. How can the Host A make it?

Here, the Destination IP Address, specially, adopts a broadcast IP address, for example, (255.255.255.255) or (10.0.30.255) or (0.0.0.0) as a wildcard. This wildcard, a special IP address, can actually be set to admittable by hosts in the LAN, of course including Host B.

After the IP encapsulation above, the MAC encapsulation proceeds.

The MAC header is prepended to the IP header. As shown in Fig. 4, within the MAC header, the Destination MAC Address which is the MAC address of one interface of Host B, (0x00, 0x50, 0xb6, 0x00, 0x45, 0xbf), the Source MAC Address is the MAC address of one interface of Host A, (0x00, 0x0f, 0x1f, 0x96, 0x4a, 0xad), and 'Type' is 0x0800, specified in RFC 894, which shows that the capsulated dat a within the MAC payload is an IP datagram.

In this scenario, in order to simplify the context and focus onto the principle, it is also taken for granted that either of Host A and Host B should have only one interface and only one IP address, i.e., neither of them is multihoming, so that realistic concerns about routing could be relieved from. In addition, other fields of headers, such as, but not limited to, IP Checksum, should also accord with relevant RFC specifications. Those skilled in the art can easily implement the present principle given the hints disclosed here.

Once all capsulations downwards layers are finished up, Host A sends that MAC frame to Host B with the help of the underneath Ethernet hardware, given that the transmission is successful.

Except for Host B, none of other hosts in the LAN will be addressed to, since all of their MAC Addresses are different from the Destination MAC Address specified in that MAC Frame. As a result, they may be able not to be disturbed by Host A.

Now, Host B can really start to de-capsulate the received MAC frame. On Data Link layer, the MAC header is parsed, and indicated by the Type (0x0800) in the MAC header, the MAC payload is presented up to the Network Layer as an IP datagram.

Refer to IP Protocol, unless Host B is explicitly configured to deny an incoming IP datagram with Destination IP address being a wildcast, (10.0.30.255) or (255.255.255.255) or (0.0.0.0), this IP datagram will be admitted as a broadcasting IP datagram (however, it does not really address to other hosts on the Network Layer). Then, indicated by Protocol (0x11) in the IP header, Host B has a reason to present the IP Payload as a UDP datagram up to the Transport Layer.

Refer to UDP Protocol, this UDP datagram is further de-capsulated and de-mutiplexed from the Destination Port, numbered 7, and the UDP Payload (12345) is presented to the UDP Echo server running on Host B as the data to be echoed for further processing.

The UDP Echo server is supposed to implicitly wildcard its local IP address. Otherwise, it will only accept an incoming UDP datagram destined for the combination of the UDP Echo Port (7) and the IP address of Host B (10.0.30.66), and thus refuse to echo the data (12345) carried by that specially encapsulated UDP datagram destined for the combination of the UDP Echo Port (7) and the broadcasting IP address (255.255.255.255) or (10.0.30.255) or (0.0.0.0).

Only this, Host B can respond to Host A in the way encapsulating data and headers downwards underlying layers, including UDP, IP and MAC, and then sending an MAC frame over the underneath Ethernet harder to Host A, as shown in Fig.3, Fig.4 and Fig.6.

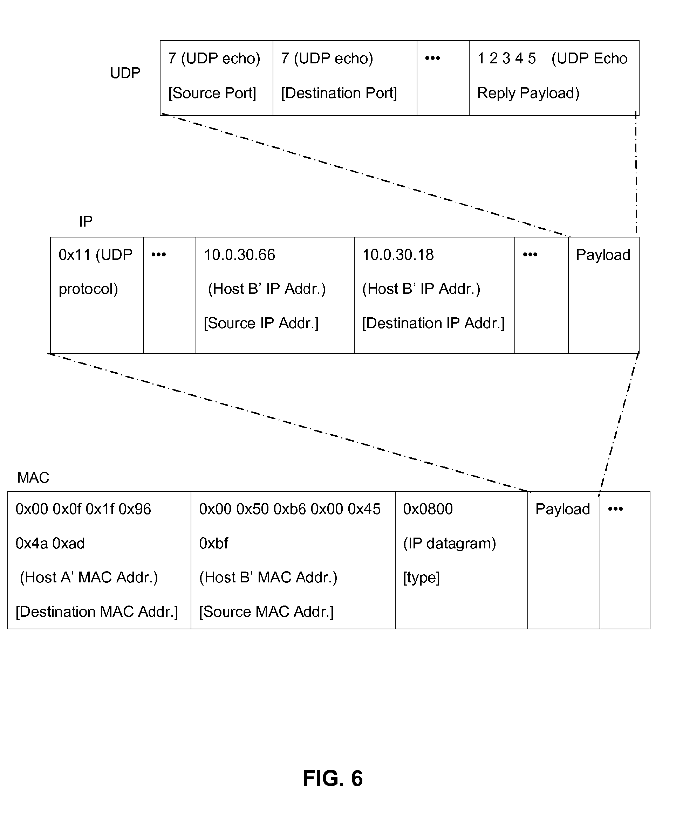

To be emphasized, during the IP datagram encapsulation of the reply packet, the Source IP Address being the IP address of Host B, (10.0.30.66), as shown in Fig.6. In this way, the IP address of Host B will be able to be given off by Host B and then retrieved by Host A.

In a second embodiment, in principle, Host A, acting as a SNMP (Simple Network Management Protocol) manager, tries to deliver a SNMP Query message embedded in a UDP datagram (and then embedded in an innovatively encapsulated IP datagram and then MAC frame) only to Host B, expects an IP datagram (certainly encapsulated in an MAC frame from Host B) carrying a SNMP Reply message from Host B, acting as a SNMP agent, and last, Host A retrieves the IP address of Host B from that IP datagram.

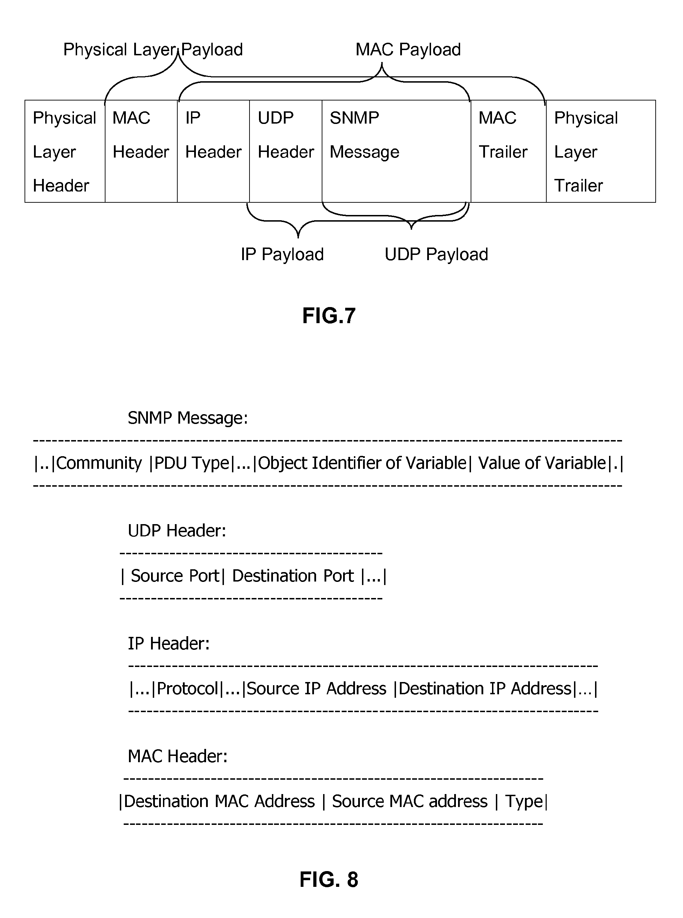

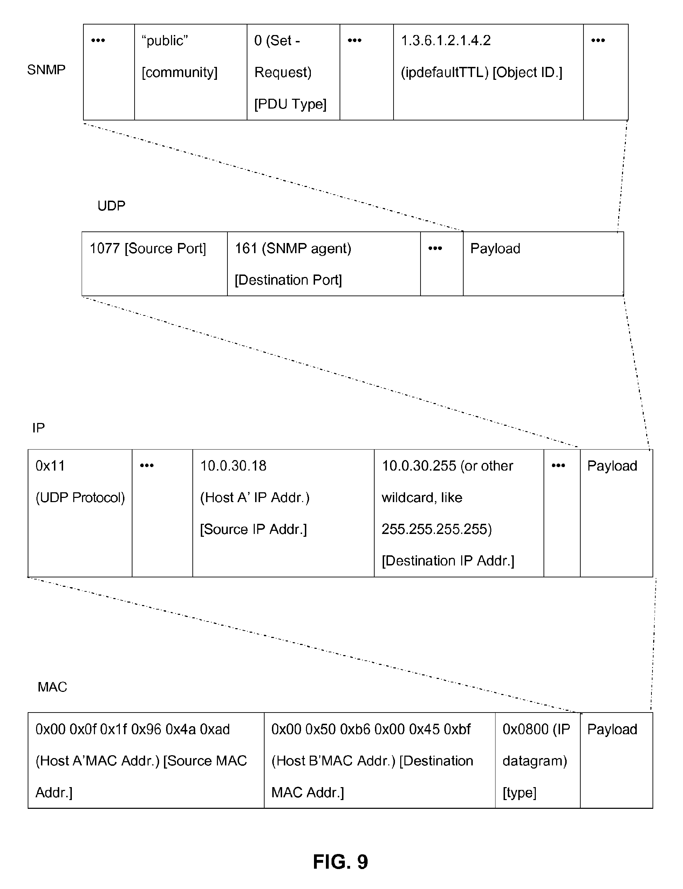

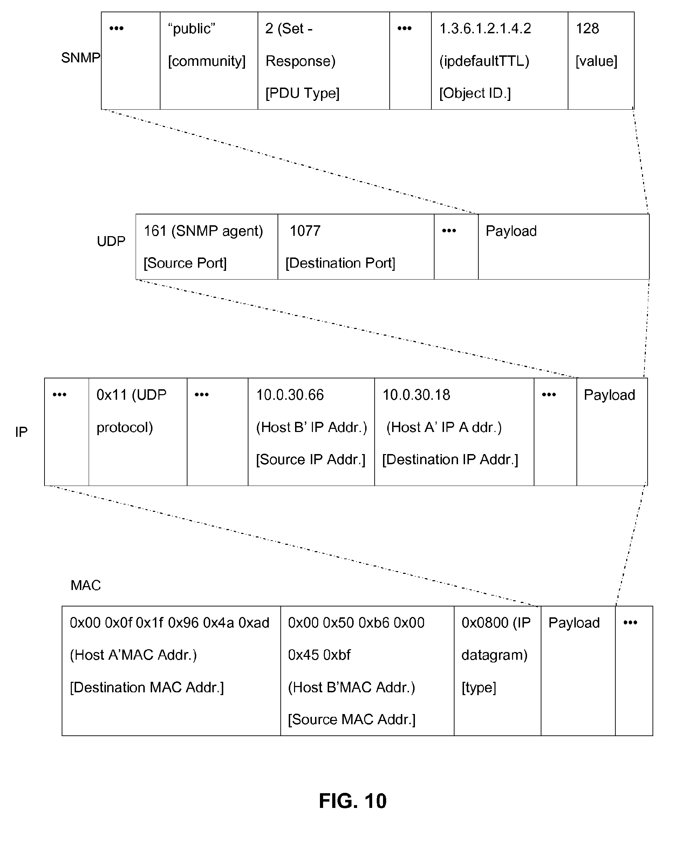

Fig.7 is an illustrative structure of a packet with SNMP message being comprised. Fig.8 shows the composition of protocol headers in the packet of Fig.7. Fig.9 shows an exemplary packet with SNMP Query message to be sent from Host A to Host B. Fig.10 is an exemplary packet with SNMP Reply message to be returned from Host B to Host A;

As illustrated in Fig. 7, Fig. 8, Fig. 9, and Fig.10, Host A starts from the encapsulation of a SNMP Query message, then puts it into a UDP datagram with a Destination Port, which is the 161, a known port destined for the SNMP agent, predefined by SNMP Protocol.

The encapsulation process on Network Layer and the Transport Layer is the same as introduced in embodiment 1, and will not be elaborated any more here. Then the resulting packet is sent to Host B from Host A. Like the embodiment 1, the host B is the only destination, and it starts de-capsulation upwards layer by layer. Similar to the UDP Echo server on Host B of embodiment 1, the SNMP agent, as a UDP server, on Host B, is also supposed to implicitly wildcard its local IP address, and thus it will respond a SNMP Reply message to the manager on Host A.

As shown in Fig. 10, the encapsulation of the SNMP Reply message proceeds on Host B. And then the built packet will be sent back to Host A as the reply, last the IP address of Host B can be gotten by Host A as same as that of embodiment 1.

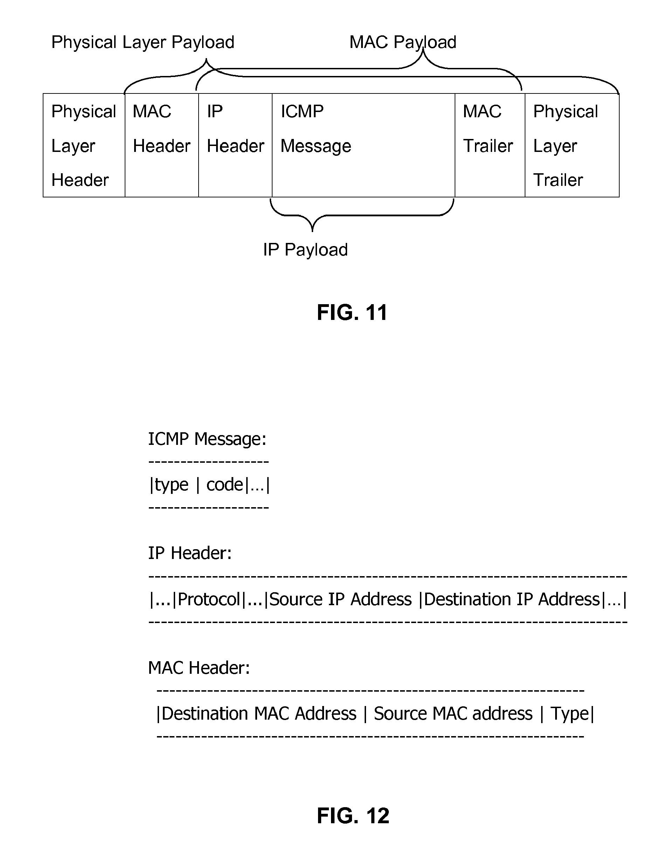

In a third embodiment which is described combined with Fig.11, Fig.12, Fig.13, and Fig.14.

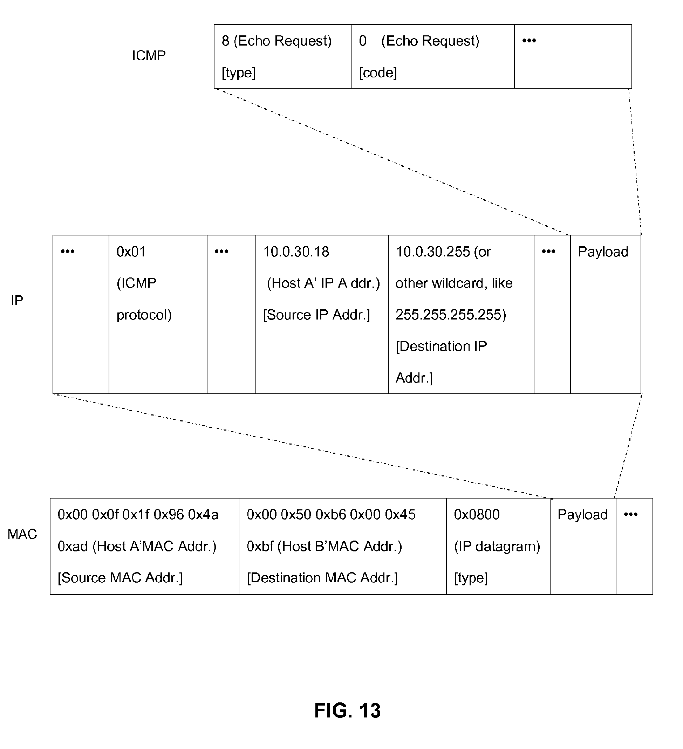

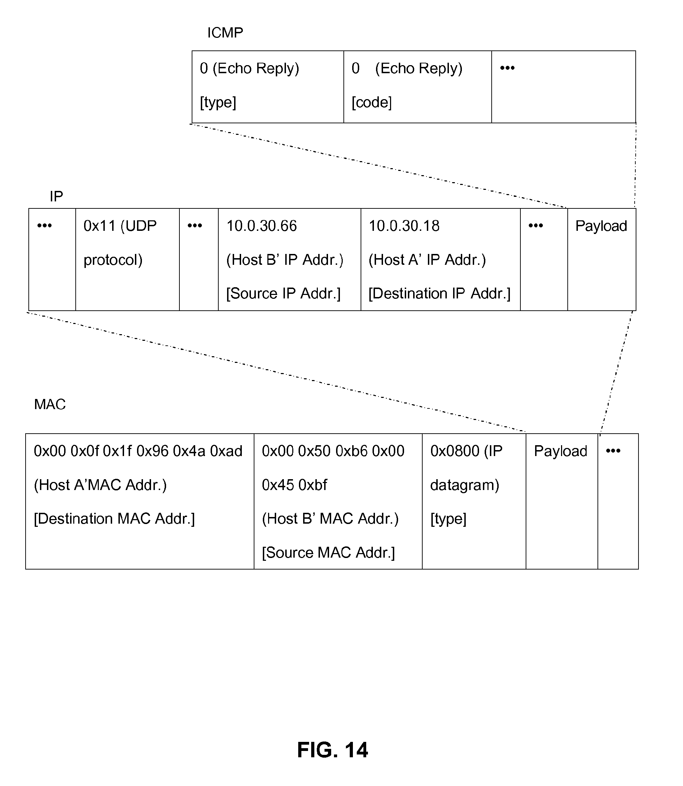

Fig. 11 is an illustrative structure of the packet encapsulated with ICMP message. Fig.12 shows the composition of protocol headers of the packet of Fig.11. Fig. 13 shows an exemplary packet with ICMP Echo Request message to be sent from Host A to Host B. Fig.14 is an exemplary packet with ICMP Echo Reply message to be returned from Host B to Host A.

see Figs. 11, and Fig. 12, an ICMP Echo Request Message can be encapsulated by Host A, illustrated in Fig 13, and then sent to Host B, similar to embodiments 1 and 2.

Given Host B is not configured to be forbidden to respond a broadcasted ICMP Echo Request message, Host B will reply to Host A by a packet, shown in Fig. 14, in which the ICMP Echo Reply message is encapsulated.

Similarly, Host A gets the IP address of Host B as the same principle and solution as those of embodiment 1 and 2.

While this invention has been described by embodiments here, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A method for a first host (A) communicating with a second host (B) in a communication network, wherein both hosts (A and B) have a first address and a second address in the communication network, **characterized in that** the method comprises steps of:
sending out a packet encapsulated with the first address and the second address of the first host (A), the second address of the second host (B), and a wildcard which can be admitted by the second host (B).

2. The method according to claim 1, wherein the first address is IP address and the second address is MAC address.

3. The method according to claim 2, wherein the wildcard is an IP broadcasting address.

4. The method according to claim 3, wherein the packet sent out is further capsulated with UDP Echo Request message.

5. The method according to claim 3, wherein the packet sent out is further capsulated with SNMP Query message.

6. The method according to claim 3, wherein the packet sent out is further capsulated with ICMP Echo Request message.

7. The method according to any of claims 1 to 6, wherein the communication network is a Local Area Network.

8. A method for a first Host (B) communicating with a second Host (A) in a communication network, wherein both hosts (B and A) have a first address and a second address in the communication network, **characterized in that** the method comprises steps of:
receiving a packet encapsulated with the first address and the second address of the second host (A), the second address of the first host (B), and a wildcard which can be admitted by the first host (B),
responding to the second host (A) with a reply packet encapsulated with the first address and second address of the second host (A), and the first address and the second address of the first host (B).

9. The method according to claim 8, wherein the first address is IP address and the second address is MAC address.

10. The method according to claim 9, wherein the wildcard is an IP broadcasting address.

11. The method according to claim 10, wherein the received packet is capsulated with UDP Echo Request message and the reply packet is encapsulated with UDP Echo Reply message.

12. The method according to claim 10, wherein the received packet is capsulated with SNMP Query message and the reply packet is encapsulated with SNMP Reply message.

13. The method according to claim 10, wherein the packet sent out is capsulated with ICMP Echo Request message and the reply packet is encapsulated with ICMP Echo Reply message.

14. The method according to any of claims 8 to 13, wherein the communication network is a Local Area Network.
